(19) Europäisches Patentamt
European Patent Office
Office européen des brevets

(11) Numéro de publication: **0 113 259**
**B1**

# (12) FASCICULE DE BREVET EUROPEEN

(45) Date de publication du fascicule du brevet: **17.02.88**

(51) Int. Cl.⁴: **C 08 L 23/04**, C 08 F 255/02 // H01B3/44 ,(C08F255/02, 230:08)

(21) Numéro de dépôt: **83402146.1**

(22) Date de dépôt: **04.11.83**

(54) **Mélange de greffage d'un silane sur une polyoléfine en vue de sa réticulation.**

(30) Priorité: **09.11.82 FR 8218778**

(43) Date de publication de la demande: **11.07.84 Bulletin 84/28**

(45) Mention de la délivrance du brevet: **17.02.88 Bulletin 88/7**

(84) Etats contractants désignés: **AT BE CH DE FR GB IT LI LU NL SE**

(56) Documents cités:
**FR - A - 1 577 875**
**FR - A - 2 293 776**
**FR - A - 2 394 574**
**US - A - 2 888 424**
**US - A - 3 079 370**
**US - A - 3 957 719**

(73) Titulaire: **FILERGIE (S.A.), 16, rue de la faisanderie, F-78301 POISSY (FR)**

(72) Inventeur: **Dupont, Robert, 11, allée des Tamaris, 78480 Verneuil/Seine (FR)**
Inventeur: **Bourjot, Pierre, 13 bis, rue Pierre Curie, 78670 Medan (FR)**

(74) Mandataire: **Ahner, Francis et al, CABINET REGIMBEAU 26, avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 113 259 B1

ACTORUM AG

**Description**

La présente invention concerne des mélanges d'additifs utilisables pour le greffage de polyoléfines destinées à être réticulées, soit au cours d'un processus en continu en une seule étape, soit au cours d'une seconde étape séparée qui succède à la première étape de greffage. Ce type de procédé est plus particulièrement mis en œuvre pour la réalisation de tubes et de gaines d'isolation de câbles électriques.

Pour assurer le greffage du silane sur la polyoléfine il est nécessaire de créer sur cette dernière des sites réactifs par l'intermédiaire d'un composé générateur de radicaux libres, généralement constitué par un peroxyde organique. Parmi les très nombreux peroxydes dont on peut a priori envisager l'utilisation à cet effet, on a toujours considéré jusqu'à ce jour que seul le peroxyde de dicumyle conduisait généralement à des résultats véritablement satisfaisants dans la pratique. Ces peroxydes sont habituellement utilisés sous la forme de poudre, de liquide, ou encore de mélange maître. Ils peuvent être introduits éventuellement dans la résine de base, avant l'opération de greffage proprement dite.

Dans le cas d'un procédé de réticulation, mis en œuvre en une seule étape, le silane, le peroxyde et le catalyseur sont introduits de façon séparées dans un mélangeur, en général dans une extrudeuse.

Dans le cas d'un procédé mis en œuvre en deux étapes distinctes, le greffage peut être réalisé de façon équivalente, mais sans introduction immédiate de catalyseur.

En règle générale, tous les peroxydes utilisés jusqu'à ce jour en tant que générateurs de radicaux libres, qui permettent le greffage d'un silane sur une polyoléfine, présentent des températures de décomposition relativement basses ou moyennes, par exemple environ 120 °C pour le peroxyde largement jugé le plus favorable, à savoir le peroxyde de dicumyle. Du fait de l'instabilité et de la volatilité de ces peroxydes, leur utilisation nécessite en général des conditions de sécurité toutes particulières.

Par ailleurs, la réaction de greffage proprement dite s'effectue à une température de l'ordre de 180 à 220 °C par réaction du silane sur les sites réactifs créés précédemment ou simultanément par l'action du peroxyde générateur de radicaux libres. Il en résulte, pour la mise en œuvre du mélange, la nécessité de créer une zone d'homogénéisation relativement étendue afin de bien mélanger les ingrédients, avant d'atteindre la zone de greffage proprement dite. De surcroît, afin d'éviter une décomposition trop précoce et une action du seul peroxyde sur la polyoléfine, la température de cette zone de prémélange ne doit pas être trop élevée. Les mélangeurs utilisés dans la pratique doivent en conséquence avoir des propriétés particulières qui se traduisent, dans le cas des extrudeuses, par l'emploi de vis très longues qui sont réalisées en un ou deux tronçons suivant les constructeurs, et de toute façon cela nécessite de faire appel à des extrudeuses de conception très particulière comparativement aux extrudeuses classiques utilisées pour les autres matières thermoplastiques. Dans la pratique, il arrive aussi de faire appel à des extrudeuses à double vis pour réaliser le greffage.

D'une manière générale, la présente invention avait pour but d'améliorer la mise en œuvre du greffage d'un silane oléfinique hydrolysable sur une polyoléfine en vue de sa réticulation.

Ce but a été atteint conformément à la présente invention en faisant appel à un générateur de radicaux libres particulier, à savoir le peroxyde de tert-butylcumyle.

Il a tout d'abord été constaté que l'utilisation du peroxyde de tert-butylcumyle permettait

la préparation et la conservation aussi bien des mélanges binaires que les mélanges ternaires, respectivement nécessaires à la mise en œuvre d'un procédé de réticulation conduit en deux étapes successives ou en une étape unique.

Le peroxyde de tert-butylcumyle reste liquide jusqu'à une température d'environ + 17 °C et peut donc en particulier être très rapidement mélangé au silane à la température ambiante. Les mélanges binaires et ternaires à base de tert-butylcumyle peuvent en outre être stockés à l'état liquide jusqu'à une température de l'ordre de –25 °C.

En faisant appel à ce peroxyde particulier, on obtient en outre une amélioration importante de la sécurité de mise en œuvre et du rendement dans les mélangeurs actuels généralement constitués par des extrudeuses à vis longues. La réaction de réticulation du peroxyde de dicumyle (peroxyde largement préféré jusqu'à ce jour) avec des polyoléfines démarre à une température de l'ordre de 120 °C. La dilution par le silane retarde quelque peu cette réaction, ce qui fait qu'une réticulation parasite ou «grillage» de la polyoléfine par le peroxyde conventionnel se produit habituellement aux alentours de 130 °C.

En faisant appel au peroxyde de tert-butylcumyle, une telle réaction parasite ne démarre qu'à une température supérieure à environ 150 °C. Il en résulte que la réaction directe du peroxyde et de la polyoléfine a infiniment moins de chances de se produire pendant la phase de prémélange évoquée précédemment. En particulier, lors de la mise en œuvre d'un procédé de réticulation en une étape unique, le mélange ternaire additionné de polyoléfine atteint la zone de greffage sans avoir subi de réticulations parasites qui se traduisent en général par l'apparition de grains dans les extrudats.

En conséquence, lorsque l'on utilise des extrudeuses spéciales à vis longues, il devient ainsi possible d'admettre une plus grande latitude de réglage des températures, et l'on peut en outre augmenter notablement la capacité de greffage par un chauffage plus élevé du mélange dans la première moitié de la vis d'extrusion. La fiabilité du procédé de réticulation ainsi que son rendement s'en trouvent donc notablement améliorés.

Il convient également de préciser que l'utilisation de ce peroxyde particulier permet de faire

appel à n'importe quel type de machines classiques à vis normales généralement utilisées pour le traitement des matières thermoplastiques, sans qu'il soit nécessaire de s'équiper des extrudeuses spéciales à vis longues évoquées précédemment.

En effet, compte tenu de la faible précocité du peroxyde de tert-butylcumyle, il devient possible de raccourcir les zones de prémélange et de greffage, ce qui rend possible l'utilisation d'une vis classique plus courte. Cette diminution de la longueur de vis d'extrusion se trouve compensée par un chauffage légèrement plus fort du mélange, sans qu'il en résulte pour autant les inconvénients d'une pré-réticulation parasite par le peroxyde.

Dans le cas particulier d'un procédé de réticulation en une seule étape, le mélange de la polyoléfine et du liquide ternaire peut à présent être effectué sans aucun risque de pré-réticulation parasite. Ceci a pour autre conséquence que la totalité du peroxyde de tert-butylcumyle devient disponible pour la réaction de greffage proprement dite qui commence au-dessus de 150 °C. Il en résulte ainsi une amélioration notable du rendement de greffage, ce qui permet également d'envisager une légère diminution de la quantité de mélange ternaire liquide utilisée et ainsi d'abaisser le prix de revient de l'opération de réticulation.

On remarquera enfin que le peroxyde de tert-butylcumyle présente une teneur en oxygène actif de 7,3%, alors que le peroxyde de dicumyle généralement utilisé jusqu'à ce jour présente une teneur correspondante de 5,65%, donc bien inférieure. Ainsi, alors que la mise en œuvre d'un procédé classique de réticulation nécessitait l'utilisation de 0,15 parties de peroxyde de dicumyle, le procédé objet de la présente invention permet d'abaisser la quantité nécessaire de peroxyde à 0,115 partie de peroxyde de tert-butylcumyle. Il en résulte donc une économie de l'ordre de 25% de peroxyde. Il a en outre été observé que la diminution de la proportion de peroxyde dans la réalisation de mélanges binaires ou ternaires conduisait de façon concomitante à un accroissement de la concentration en silane, ce qui contribue également à améliorer le rendement du greffage.

Conformément à la présente invention, le mélange d'additifs utilisable pour la réticulation de polyoléfines se trouve principalement caractérisé en ce qu'il contient, pour 100 parties en poids:

- 2 à 10 parties en poids de peroxyde de tert-butylcumyle;
- 85 à 98 parties en poids de silane oléfinique hydrolysable et
- 0 à 5 parties en poids de catalyseur de condensation de silanols.

Lorsque l'on désire mettre en œuvre le procédé de réticulation au cours d'une seule et unique étape, par exemple au sein de la même extrudeuse, le greffage du silane sur la polyoléfine est réalisé en présence simultanée de peroxyde de tert-butylcumyle et d'un catalyseur de condensation de silanols, ce dernier permettant de conduire à la réticulation de la polyoléfine en présence d'eau, après greffage.

Si l'on désire mettre en œuvre le procédé de réticulation au cours de deux étapes distinctes, il est possible de stocker la polyoléfine sur laquelle se trouvent greffés les groupes générateurs de silanols. Dans pareil cas, l'étape de réticulation proprement dite ne s'effectuera qu'ultérieurement, lorsque la polyoléfine greffée aura été mise au contact d'eau après addition d'un catalyseur de condensation des groupes silanols.

Pour mettre en œuvre le procédé de réticulation au cours d'une ou de deux étapes, il convient de soumettre la polyoléfine à un travail mécanique qui peut être réalisé dans tout type de mélangeurs appropriés et en particulier dans une extrudeuse qui permet de réaliser une bonne action de malaxage avec une grande facilité de contrôle de la température.

La réticulation proprement dite de la polyoléfine greffée par le silane peut être avantageusement obtenue en exposant à l'eau la polyoléfine ainsi modifiée, habituellement après mise en forme par extrusion, en présence du catalyseur de condensation de silanols. Dans certains cas l'humidité présente dans l'atmosphère ambiante peut être suffisante pour provoquer la réticulation dont la vitesse peut cependant être améliorée par exemple par immersion dans l'eau ou encore en faisant appel à un procédé et à une installation particulière notamment décrite dans le brevet français n° 2 493 026 appartenant à la demanderesse.

La polyoléfine susceptible d'être greffée et réticulée conformément à la présente invention peut par exemple être constituée par du polyéthylène ou encore par un copolymère d'éthylène et d'au moins un autre comonomère. A titre d'exemples de tels copolymères, on mentionnera les copolymères d'éthylène renfermant jusqu'à environ 10 moles-% d'au moins un comonomère à insaturation monoéthylénique en $C_3$ à $C_6$, ou encore des copolymères d'éthylène renfermant jusqu'à environ 50 moles-% d'au moins un ester tel que par exemple l'acétate ou l'acrylate d'éthyle ou de vinyle.

Le silane utilisable pour assurer l'opération de greffage d'une telle polyoléfine peut, par exemple, répondre à la formule générale

$$R\,R'\,R''\,R'''\,Si$$

dans laquelle les symboles R, R', R'', R''' représentent, indépendamment les uns des autres, des radicaux monovalents hydrocarbonés pouvant contenir un ou plusieurs atomes d'oxygène et dont l'un au moins présente une insaturation oléfinique et au moins un autre forme avec Si une liaison hydrolysable génératrice d'un groupe silanol.

Il peut en particulier s'agir de silane de formule R R' R'' R''' Si dans laquelle R représente un radical vinyle ou allyle et les autres radicaux R', R'' et R''' représentent un groupe méthoxy, éthoxy, propoxy ou butoxy. A titre d'exemples particuliers d'un tel silane on mentionnera le vinyltriméthoxysilane qui conduit à d'excellents résultats dans la pratique.

Le catalyseur de condensation de silanols nécessaire à la réticulation de la polyoléfine modifiée peut par exemple être avantageusement constitué par des carboxylates métalliques, tels que des esters lauriques d'étain, parmi lesquels on citera à titre d'exemple particulier le dibutyldilaurate d'étain.

Conformément au procédé de la présente invention, on utilise avantageusement de l'ordre de 0,5 à 5% en poids de silane par rapport au poids de polyoléfine.

Il est également apparu avantageux d'utiliser de l'ordre de 0,1% en poids de peroxyde de tert-butylcumyle par rapport au poids de polyoléfine.

Enfin, on précisera que le procédé objet de la présente invention peut être avantageusement mis en œuvre en utilisant de l'ordre de 0,01 à 0,15% en poids de catalyseur de condensation de silanols par rapport au poids de la polyoléfine.

En faisant appel à un mélange ternaire contenant jusqu'à 5% en poids de catalyseur de condensation de silanols, la mise en forme du produit réticulable peut être réalisée de façon continue, par exemple avantageusement en effectuant toutes les opérations de mélange au sein d'une seule et même extrudeuse.

En variante, il est également possible de faire appel au mélange binaire exempt de catalyseur, la réticulation s'effectue en deux étapes. Dans ce dernier cas, il est possible de stocker les ingrédients nécessaires à la composition de polyoléfine réticulable sous la forme de deux constituants séparés, le premier étant constitué par la polyoléfine modifiée par greffage du silane et le second comprenant un mélange de la polyoléfine non modifiée et du catalyseur de condensation de silanols.

Selon une caractéristique additionnelle de la présente invention, les mélanges d'additifs, qu'ils soient binaires ou ternaires, sont avantageusement additionnés d'un anti-oxygène qui est soluble dans le silane et qui n'inhibe que faiblement l'action du peroxyde de tert-butylcumyle. A titre d'exemples de ces anti-oxygènes, on peut citer les dérivés quinoléiques, tels que la 2,2,4-triméthyl-1,2-dihydroquinoléine polymérisée, ainsi que les dérivés phénoliques tels que les phénols bloqués, les phénols contenant un groupe thio comme le 4,4'-thio bis(3-méthyl-6-tert-butyl-phénol), ou encore les propionates de phénol.

Conformément à la présente invention, l'anti-oxygène est additionné à raison de 10 à 50 parties en poids pour 100 parties en poids de mélange binaire ou ternaire de base.

Bien entendu, la présente invention n'est nullement limitée aux modes de mise en œuvre particuliers décrits.

**Revendications pour les Etats contracteurs BE CH DE FR GB IT LI LU NL SE**

1. Mélange d'additifs utilisable pour la réticulation de polyoléfines et comprenant, pour 100 parties en poids:

- 2 à 10 parties en poids de peroxyde de tert-butylcumyle;
- 85 à 98 parties en poids de silane oléfinique hydrolysable et
- 0 à 5 parties en poids de catalyseur de condensation de silanols.

2. Mélange selon la revendication 1, caractérisé par le fait que le silane répond à la formule générale:

$$R\ R'\ R''\ R'''\ Si$$

dans laquelle les symboles R, R', R'' et R''' représentent, indépendamment les uns des autres, des radicaux monovalents hydrocarbonés pouvant contenir un ou plusieurs atomes d'oxygène, et dont l'un au moins présente une insaturation oléfinique et au moins un autre forme avec Si une liaison hydrolysable génératrice d'un groupe silanol.

3. Mélange selon la revendication 2, caractérisé par le fait que R représente un radical vinyle ou allyle et R', R'' et R''' représentent des groupes alcoxy en $C_1$ à $C_4$.

4. Mélange selon la revendication 2, caractérisé par le fait que le silane est constitué par le vinyltriméthoxysilane.

5. Mélange selon l'une des revendications 1 à 4, caractérisé par le fait que le catalyseur de condensation de silanols est constitué par des carboxylates métalliques, tels que des esters lauriques d'étain, en particulier le dibutyldilaurate d'étain.

6. Mélange selon l'une des revendications 1 à 5, caractérisé en ce qu'il contient en outre un anti-oxygène qui est soluble dans le silane et qui n'inhibe que faiblement l'action du peroxyde de tert-butylcumyle.

7. Mélange selon la revendication 6, caractérisé en ce que l'anti-oxygène est additionné à raison de 10 à 50 parties en poids pour 100 parties en poids du mélange de base contenant le peroxyde, le silane et éventuellement le catalyseur.

8. Mélange selon l'une des revendications 6 et 7, caractérisé en ce que l'anti-oxygène est un dérivé quinoléique, tel que le 2,2,4-triméthyl-1,2-dihydroquinoléine polymérisée.

9. Mélange selon l'une des revendications 6 et 7, caractérisé en ce que l'anti-oxygène est un dérivé phénolique, tel que les phénols bloqués, les phénols contenant un groupe thio et les propionates de phénol.

**Revendications pour l'Etat contractant AT**

1. Procédé de fabrication d'un mélange d'additifs utilisable pour la réticulation de polyoléfines, caractérisé en ce qu'il consiste à mélanger entre eux:

- 2 à 10 parties en poids de peroxyde de tert-butylcumyle;
- 85 à 98 parties en poids de silane oléfinique hydrolysable et
- 0 à 5 parties en poids de catalyseur de condensation de silanols.

2. Procédé selon la revendication 1, caractérisé par le fait que le silane répond à la formule

générale:

R R′ R″ R‴ Si

dans laquelle les symboles R, R′, R″ et R‴ représentent, indépendamment les uns des autres, des radicaux monovalents hydrocarbonés pouvant contenir un ou plusieurs atomes d'oxygène, et dont l'un au moins présente une insaturation oléfinique et au moins un autre forme avec Si une liaison hydrolysable génératrice d'un groupe silanol.

3. Procédé selon la revendication 2, caractérisé par le fait que R représente un radical vinyle ou allyle et R′, R″ et R‴ représentent des groupes alcoxy en $C_1$ à $C_4$.

4. Procédé selon la revendication 2, caractérisé par le fait que le silane est constitué par le vinyltriméthoxysilane.

5. Procédé selon l'une des revendications 1 à 4, caractérisé par le fait que le catalyseur de condensation de silanols est constitué par des carboxylates métalliques tels que des esters lauriques d'étain, en particulier le dibutyldilaurate d'étain.

6. Procédé selon l'une des revendications 1 à 5, caractérisé en ce qu'il contient en outre un anti-oxygène qui est soluble dans le silane et qui n'inhibe que faiblement l'action du peroxyde de tert-butylcumyle.

7. Procédé selon la revendication 6, caractérisé en ce que l'anti-oxygène est additionné à raison de 10 à 50 parties en poids pour 100 parties en poids du mélange de base contenant le peroxyde, le silane et éventuellement le catalyseur.

8. Procédé selon l'une des revendications 6 et 7, caractérisé en ce que l'anti-oxygène est un dérivé quinoléique, tel que la 2,2,4-triméthyl-1,2-dihydroquinoléine polymérisée.

9. Procédé selon l'une des revendications 6 et 7, caractérisé en ce que l'anti-oxygène est un dérivé phénolique, tel que les phénols bloqués, les phénols contenant un groupe thio et les propionates de phénol.

**Claims for the Contracting States BE CH DE FR GB IT LI LU NL SE**

1. Mixture of additives able to be used for the cross-linking of polyolefins and comprising, for 100 parts by weight:
- 2 to 10 parts by weight tert-butylcumyl peroxide;
- 85 to 98 parts by weight hydrolyzable olefinic silane and
- 0 to 5 parts by weight silanol condensation catalyst.

2. Mixture according to Claim 1, characterised by the fact that the silane has the general formula:

R R′ R″ R‴ Si

in which the symbols R, R′, R″ and R‴ represent, independently of each other, hydrocarbon monovalent radicals able to contain one or more atoms of oxygen and whereof at least one has olefinic insaturation and at least one other forms with Si a hydrolyzable bond generating a silanol group.

3. Mixture according to Claim 2, characterised by the fact that R represents a vinyl or allyl radical and R′, R″ and R‴ represent alcoxy groups of $C_1$ to $C_4$.

4. Mixture according to Claim 2, characterised by the fact that the silane is constituted by vinyl trimethoxysilane.

5. Mixture according to one of Claims 1 to 4, characterised by the fact that the silanol condensation catalyst is constituted by metallic carboxylates, such as lauric esters of tin, in particular tin dibutyldilaurate.

6. Mixture according to one of Claims 1 to 5, characterised in that it also contains an antioxidant which is soluble in silane and only slightly inhibits the action of the tert-butylcumyl peroxide.

7. Mixture according to Claim 6, characterised in that the antioxidant is added at the rate of 10 to 50 parts by weight per 100 parts by weight of the base mixture containing peroxide, silane and possibly the catalyst.

8. Mixture according to one of Claims 6 and 7, characterised in that the antioxidant is a quinolic derivative, such as polymerised 2,2,4-trimethyl-1,2-dihydroquinoline.

9. Mixture according to one of Claims 6 and 7, characterised in that the antioxidant is a phenolic derivative, such as blocked phenols, the phenols containing a thio group and phenol propionates.

**Claims for the Contracting State AT**

1. Method for producing a mixture of additives which can be used for the cross-linking of polyolefins, characterised in that it consists of mixing together:
- 2 to 10 parts by weight of tert-butylcumyl peroxide;
- 85 to 98 parts by weight of hydrolyzable olefinic silane;
- 0 to 5 parts by weight of silanol condensation catalyst.

2. Method according to Claim 1, characterised by the fact that the silane fulfils the general formula:

R R′ R″ R‴ Si

in which the symbols R, R′, R″ and R‴ represent, independently of each other, hydrocarbon monovalent radicals able to contain one or more oxygen atoms and whereof at least one has olefinic insaturation and at least one other forms with Si a hydrolyzable bond generating a silanol group.

3. Method according to Claim 2, characterised by the fact that R represents a vinyl or allyl radical and R′, R″ and R‴ represent alcoxy groups of $C_1$ to $C_4$.

4. Method according to Claim 2, characterised by the fact that the silane is constituted by vinyl trimethoxysilane.

5. Method according to one of Claims 1 to 4, characterised by the fact that the silanol condensation catalyst is constituted by metallic carboxylates such as lauric esters of tin, in particular tin dibutyldilaurate.

6. Method according to one of Claims 1 to 5, characterised in that it also contains an antioxidant which is soluble in silane and only slightly inhibits the action of the tert-butylcumyl peroxide.

7. Method according to Claim 6, characterised in that the antioxidant is added at the rate of 10 to 50 parts by weight for 100 parts by weight of the base mixture containing peroxide, silane and possibly the catalyst.

8. Method according to one of Claims 6 and 7, characterised in that the antioxidant is a quinolic derivative, such as polymerised 2,2,4-trimethyl-1,2-dihydroquinoline.

9. Method according to one of Claims 6 and 7, characterised in that the antioxidant is a phenolic derivative, such as blocked phenols, the phenols containing a thio group and phenol propionates.

**Patentansprüche für die Vertragsstaaten BE CH DE FR GB IT LI LU NL SE**

1. Für die Vernetzung von Polyolefinen einsetzbares Additivgemisch, gekennzeichnet durch:
- 2–10 Gew.-Teile tert.-Butylcumylperoxid;
- 85–98 Gew.-Teile hydrolysierbares olefinisches Silan und
- 0– 5 Gew.-Teile Katalysator für die Kondensation von Silanolen,

auf 100 Gew.-Teile.

2. Gemisch nach Anspruch 1, dadurch gekennzeichnet, dass das Silan der allgemeinen Formel:

R R′ R″ R‴ Si

entspricht, wobei die Symbole R, R′, R″ und R‴ unabhängig voneinander einwertige Kohlenwasserstoffreste bezeichnen, die ein oder mehrere Sauerstoffatome enthalten können und von denen mindestens einer eine olefinisch ungesättigte Stelle aufweist und wenigstens ein anderer mit Si eine hydrolisierbare, eine Silanolgruppe erzeugende Bindung bildet.

3. Gemisch nach Anspruch 2, dadurch gekennzeichnet, dass R einen Vinyl- oder Allylrest bezeichnet und R′, R″ und R‴ Alkoxygruppen mit $C_1$–$C_4$ bezeichnen.

4. Gemisch nach Anspruch 2, dadurch gekennzeichnet, dass das Silan Vinyltrimethoxysilan ist.

5. Gemisch nach einem der Ansprüche 1 bis 4, dadurch gekennzeichnet, dass der Katalysator für die Kondensation von Silanolen ein Metallkarboxylat ist, wie z.B. ein Zinn-Laurat, insbesondere Dibutylzinn-dilaurat.

6. Gemisch nach einem der Ansprüche 1 bis 5, dadurch gekennzeichnet, dass es ausserdem ein Antioxidans enthält, das im Silan löslich ist und das die Wirksamkeit des tert.-Butylcumylperoxids nur geringfügig hemmt.

7. Gemisch nach Anspruch 6, dadurch gekennzeichnet, dass das Antioxidans in einer Menge von 10–15 Gew.-Teilen hinzugegeben wird, bezogen auf 100 Gew.-Teile des Grundgemisches, welches das Peroxid, das Silan und ggf. den Katalysator enthält.

8. Gemisch nach einem der Ansprüche 6 bis 7, dadurch gekennzeichnet, dass das Antioxidans ein Chinolinderivat ist, wie z.B. das polymerisierte 2,2,4-Trimethyl-1,2-dihydrochinolin.

9. Gemisch nach einem der Ansprüche 6 und 7, dadurch gekennzeichnet, dass das Antioxidans ein Phenolderivat ist, wie z.B. die blockierten Phenole, die Phenole, die eine Thiogruppe enthalten, und die Propionate von Phenol.

**Patentansprüche für den Vertragsstaat AT**

1. Verfahren zur Herstellung eines für die Vernetzung von Polyolefinen einsetzbaren Additivgemischs, dadurch gekennzeichnet, dass man folgende Bestandteile miteinander vermischt:
- 1–10 Gew.-Teile tert.-Butylcumylperoxid;
- 85–98 Gew.-Teile hydrolysierbares olefinisches Silan und
- 0– 5 Gew.-Teile Katalysator für die Kondensation von Silanolen.

2. Verfahren nach Anspruch 1, dadurch gekennzeichnet, dass das Silan der allgemeinen Formel:

R R′ R″ R‴ Si

entspricht, wobei die Symbole R, R′, R″ und R‴ unabhängig voneinander einwertige Kohlenwasserstoffreste bezeichnen, die ein oder mehrere Sauerstoffatome enthalten können und von denen mindestens einer eine olefinisch ungesättigte Stelle aufweist und wenigstens ein anderer mit Si eine hydrolisierbare, eine Silanolgruppe erzeugende Bindung bildet.

3. Verfahren nach Anspruch 2, dadurch gekennzeichnet, dass R einen Vinyl- oder Allylrest bezeichnet und R′, R″ und R‴ Alkoxygruppen mit $C_1$–$C_4$ bezeichnen.

4. Verfahren nach Anspruch 2, dadurch gekennzeichnet, dass das Silan Vinyltrimethoxysilan ist.

5. Verfahren nach einem der Ansprüche 1 bis 4, dadurch gekennzeichnet, dass der Katalysator für die Kondensation von Silanolen ein Metallkarboxylat ist, wie z.B. ein Zinn-Laurat, insbesondere Dibutylzinn-dilaurat.

6. Verfahren nach einem der Ansprüche 1 bis 5, dadurch gekennzeichnet, dass es ausserdem ein Antioxidans enthält, das im Silan löslich ist und das die Wirksamkeit des tert.-Butylcumylperoxids nur geringfügig hemmt.

7. Verfahren nach Anspruch 6, dadurch gekennzeichnet, dass das Antioxidans in einer Menge von 10–15 Gew.-Teilen hinzugegeben wird, bezogen auf 100 Gew.-Teile des Grundgemisches, welches das Peroxid, das Silan und ggf. den Katalysator enthält.

8. Verfahren nach einem der Ansprüche 6 bis 7, dadurch gekennzeichnet, dass das Antioxidans ein Chinolinderivat ist, wie z.B. das plymerisierte 2,2,4-Trimethyl-1,2-dihydrochinolin.

9. Verfahren nach einem der Ansprüche 6 und 7, dadurch gekennzeichnet, dass das Antioxidans ein Phenolderivat ist, wie z.B. die blockierten Phenole, die Phenole, die eine Thiogruppe enthalten, und die Propionate von Phenol.